# EUROPEAN PATENT APPLICATION

(11) **EP 2 800 265 A1**
(43) Date of publication of application: **05.11.2014**
(21) Application number: 13275109.0
(22) Date of filing: 03.05.2013
(51) Int. Cl.: H02M 7/483, H02M 1/38

(54) **Converter**

(71) Applicant: ALSTOM Technology Ltd, 5400 Baden (CH)
(72) Inventor: Trainer, David Reginald, Derby DE24 0AQ (GB); Dyke, Kevin James, Stafford, Staffordshire ST17 4YA (GB); Oates, Colin, Brocton, Stafford ST17 0TL (GB)
(74) Representative: Potter Clarkson LLP

(57) **Abstract**

A voltage source converter (30) comprises:
a converter limb (36) extending between first and second DC terminals (32,34) and having first and second limb portions (38,40) separated by an AC terminal (42), the first and second DC terminals (32,34) being connectable to a DC electrical network (44) and the AC terminal (42) being connectable to an AC electrical network (46), each limb portion (38,40) including a primary switching element (48), the primary switching element (48) of each limb portion (38,40) being switchable to switch the corresponding limb portion (38,40) into and out of circuit between the corresponding DC terminal (32,34) and the AC terminal (42) to control the configuration of an AC voltage at the AC terminal (42);
an auxiliary limb (50) including an auxiliary converter, the auxiliary converter including at least one auxiliary switching element, the auxiliary limb (50) being connected to the AC terminal (42), the primary switching element (48) of each limb portion (38,40) being switchable to switch the auxiliary limb (50) into and out of circuit with the corresponding limb portion (38,40) and thereby switch the auxiliary limb (50) into and out of circuit with the corresponding DC terminal (32,34); and
a control unit to selectively control the switching of the or each auxiliary switching element of the auxiliary converter to control the auxiliary limb (50) as a current source in a primary operating mode to inject a circulation current (68) that flows in one direction in one of the first and second limb portions (38,40) to minimise a limb portion current (66) flows in the opposite direction in that limb portion (38,40).

## Description

This invention relates to a voltage source converter.

In power transmission networks alternating current (AC) power is typically converted to direct current (DC) power for transmission via overhead lines and/or under-sea cables. This conversion removes the need to compensate for the AC capacitive load effects imposed by the transmission line or cable, and thereby reduces the cost per kilometer of the lines and/or cables. Conversion from AC to DC thus becomes cost-effective when power needs to be transmitted over a long distance.

The conversion of AC power to DC power is also utilized in power transmission networks where it is necessary to interconnect the AC electrical networks operating at different frequencies.

In any such power transmission network, converters are required at each interface between AC and DC power to effect the required conversion, and one such form of converter is a voltage source converter (VSC).

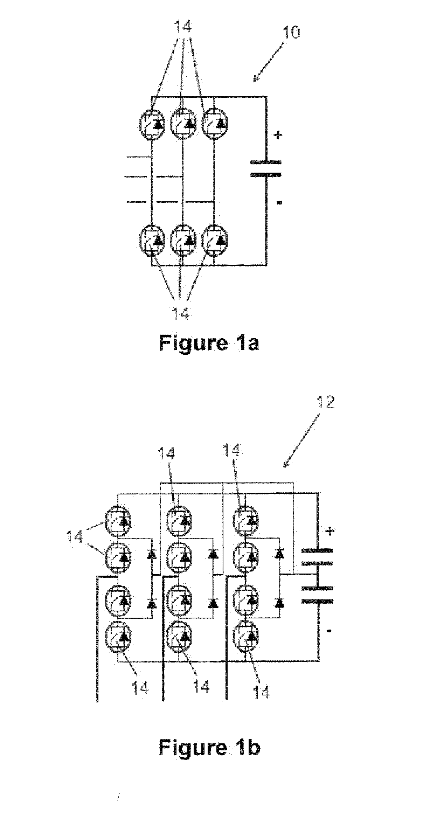

It is known in voltage source converters to use six-switch (two-level) and three-level converter topologies 10,12 with insulated gate bipolar transistors (IGBT) 14, as shown in Figures 1a and 1b. The IGBT devices 14 are connected and switched together in series to enable high power ratings of 10's to 100's of MW to be realized. In addition, the IGBT devices 14 switch on and off several times at high voltage over each cycle of the AC supply frequency to control the harmonic currents being fed to the AC electrical network. This leads to high losses, high levels of electromagnetic interference and a complex design.

According to a first aspect of the invention, there is provided a voltage source converter comprising:
a converter limb extending between first and second DC terminals and having first and second limb portions separated by an AC terminal, the first and second DC terminals being connectable to a DC electrical network and the AC terminal being connectable to an AC electrical network, each limb portion including a primary switching element, the primary switching element of each limb portion being switchable to switch the corresponding limb portion into and out of circuit between the corresponding DC terminal and the AC terminal to control the configuration of an AC voltage at the AC terminal;
an auxiliary limb including an auxiliary converter, the auxiliary converter including at least one auxiliary switching element, the auxiliary limb being connected to the AC terminal, the primary switching element of each limb portion being switchable to switch the auxiliary limb into and out of circuit with the corresponding limb portion and thereby switch the auxiliary limb into and out of circuit with the corresponding DC terminal; and
a control unit to selectively control the switching of the or each auxiliary switching element of the auxiliary converter to control the auxiliary limb as a current source in a primary operating mode to inject a circulation current that flows in one direction in one of the first and second limb portions to minimise a limb portion current flowing in the opposite direction in that limb portion.

During operation of the voltage source converter to transfer power between the AC and DC electrical networks, the primary switching elements of the limb portions are switched to alternately switch the limb portions into circuit between the AC terminal and the corresponding DC terminal over a duty cycle. This means that the flow of current in the voltage source converter alternates between the limb portions over the duty cycle. As such, when one of the limb portions is switched into circuit between the AC terminal and the corresponding DC terminal and thereby is conducting a limb portion current between the AC terminal and corresponding DC terminal, the other of the limb portions is switched out of circuit between the AC terminal and the corresponding DC terminal and thereby is not conducting any limb portion current between the AC terminal and corresponding DC terminal.

Prior to the commutation of current from one limb portion to the other limb portion (i.e. prior to the switching of each limb portion into or out of circuit between the AC terminal and the corresponding DC terminal), the auxiliary limb is controlled as a current source in the primary operating mode to inject the circulation current to minimise the limb portion current flowing in the conducting limb portion. This enables soft-switching of the primary switching elements of the limb portions, thus minimising switching losses during operation of the voltage source converter to transfer power between the AC and DC electrical networks.

In contrast, omission of the auxiliary limb and control unit from the voltage source converter means that the conducting limb portion is conducting a significant level of current immediately prior to the commutation of current from one limb portion to the other limb portion, thus resulting in the problems described earlier with reference to the conventional voltage source converters of Figures 1a and 1b.

The configuration of the voltage source converter according to the invention therefore results in an efficient means of connecting the AC and DC electrical networks and transferring power therebetween.

The auxiliary limb is only required to be controlled as a current source in the primary operating mode to enable soft-switching of the primary switching elements of the limb portions for relatively short periods of times over a duty cycle. As a result, the overall rating of the voltage source converter may be reduced by optimising the auxiliary limb for this specific task.

In embodiments of the invention, the circulation and limb portion currents may be equal in magnitude. This enables the limb portion current in the conducting limb portion to be reduced to zero to enable zero current switching of the primary switching elements of the limb portions.

Depending on the requirements of the associated power application, each limb portion may be switched into and out of circuit between the corresponding DC terminal and the AC terminal once or a plurality of times (e.g. in a pulse width modulated manner) per cycle of fundamental frequency of the AC electrical network. Thus, prior to the or each switching of each limb portion into or out of circuit between the AC terminal and the corresponding DC terminal in a cycle of fundamental frequency of the AC electrical network, the voltage source converter may be operated accordingly to enable soft-switching of the primary switching elements of the limb portions. More particularly, in embodiments of the invention, the control unit may selectively control the switching of the or each auxiliary switching element of the auxiliary converter to control the auxiliary limb as a current source in the primary operating mode once or a plurality of times per cycle of fundamental frequency of the AC electrical network.

In further embodiments of the invention, the control unit may selectively control the switching of the or each auxiliary switching element of the auxiliary converter to control the auxiliary limb as a current source in a secondary operating mode to inject a current into the AC terminal to:
filter one or more current components from an alternating current presented to the AC electrical network and/or a direct current presented to the DC electrical network (i.e. carry out active current filtering); and/or
modify an alternating current presented to the AC electrical network into a leading or lagging alternating current (i.e. carry out reactive power compensation).

In other words, the control unit may selectively control the switching of the or each auxiliary switching element of the auxiliary converter to control the auxiliary limb as a current source in the secondary operating mode to inject a current into the AC terminal to:
- only carry out active current filtering;
- only carry out reactive power compensation;
- sequentially carry out active current filtering and reactive power compensation;
- simultaneously carry out active current filtering and reactive power compensation.

The configuration of the voltage source converter to enable further control of the auxiliary limb as a current source in the secondary operating mode provides the voltage source converter with active current filtering and/or reactive power compensation capabilities.

The provision of the voltage source converter with the active current filtering capability renders the voltage source converter capable of producing high quality output currents at the AC and/or DC terminals of the voltage source converter through cancellation of one or more unwanted current components (e.g. harmonic current components, DC ripple). In contrast, omission of the active current filtering capability from the voltage source converter means that it would be necessary to connect additional filtering hardware to the AC and/or DC terminals of the voltage source converter to obtain the desired high quality output currents, thus adding to the real estate requirements of the voltage source converter.

The provision of the voltage source converter with the reactive power compensation capability renders the voltage source converter capable of exchanging reactive power to the AC electrical network to meet a desired real power-reactive power operating envelope. In addition, if the AC terminal is connected in use to a transformer, reactive power may be exchanged with the AC electrical network to fulfil reactive power requirements of the transformer. In contrast, omission of the reactive power compensation capability from the voltage source converter means that it would be necessary to connect additional converter hardware to the AC terminal of the voltage source converter to enable exchange of reactive power with the AC electrical network, thus further adding to the real estate requirements of the voltage source converter.

The configuration of the voltage source converter to enable further control of the auxiliary limb as a controlled source in the secondary operating mode therefore provides the voltage source converter with additional power transfer functionality without requiring the connection of additional hardware to the voltage source converter, thus increasing the efficiency and reliability of the voltage source converter.

The control unit may selectively control the switching of the or each auxiliary switching element of the auxiliary converter to control the auxiliary limb as a current source in the primary and secondary operating modes in various sequential orders.

For example, in embodiments of the invention, the control unit may selectively control the switching of the or each auxiliary switching element of the auxiliary converter to control the auxiliary limb as a current source alternately in the primary and secondary operating modes.

Alternating between the primary and secondary operating modes enables the auxiliary limb to be controlled as a current source to inject a current to not only enable soft-switching of the primary switching elements of the limb portions during the operation of the voltage source converter to transfer power between the AC and DC electrical networks, but also carry out active current filtering and/or reactive power compensation in the periods before and after the commutation of current from one limb portion to the other limb portion. In this manner the auxiliary limb is in use throughout the operation of the voltage source converter to transfer power between the AC and DC electrical networks, thus maximising the usage of the auxiliary limb and thereby further increasing the efficiency of the voltage source converter.

In embodiments of the invention, the auxiliary limb may further include at least one impedance element, and the control unit selectively controls the switching of the or each auxiliary switching element of the auxiliary converter to modify the voltage across the or each inductive element to control the auxiliary limb as a current source in the or each operating mode. The or each impedance element may include, for example, an inductor.

The inclusion of the or each impedance element in the auxiliary limb provides a reliable means of decoupling of the AC voltage at the AC terminal and any voltage generated by the auxiliary converter to enable control of the auxiliary limb as a current source.

The manner in which the auxiliary limb is connected to the AC terminal may vary.

In embodiments of the invention, a first end of the auxiliary limb may be connected to the AC terminal and a second end of the auxiliary limb is connectable to ground.

In further embodiments of the invention, a first end of the auxiliary limb may be connected to the AC terminal and a second end of the auxiliary limb is connected to a third DC terminal connected between the first and second DC terminals. The third DC terminal may be a junction between two DC link capacitive elements connected between the first and second DC terminals.

In embodiments of the invention, the auxiliary converter may include at least one module, the or each module including at least one auxiliary switching element and at least one energy storage device, the or each auxiliary switching element and the or each energy storage device of each module combining to selectively provide a voltage source.

The inclusion of the or each module in the auxiliary converter provides reliable means of controlling the auxiliary limb as a current source in the or each operating mode.

In such embodiments, the or each auxiliary switching element and the or each energy storage device in the or each module may combine to selectively provide a bidirectional voltage source that can provide negative, zero or positive voltage. The configuration of the or each module to provide a bidirectional voltage source may vary. For example, the or each module may include two pairs of auxiliary switching elements connected in parallel with an energy storage device in a full-bridge arrangement to define a 4-quadrant bipolar module that can provide negative, zero or positive voltage and can conduct current in two directions.

In embodiments employing the use of at least one module, the auxiliary converter may include a plurality of series-connected modules. The plurality of series-connected modules defines a chain-link converter.

It is possible to build up a combined voltage across the chain-link converter, which is higher than the voltage available from each of its individual modules, via the insertion of the energy storage devices of multiple modules, each providing its own voltage, into the chain-link converter. In this manner switching of the or each auxiliary switching element in each module causes the chain-link converter to provide a stepped variable voltage source, which permits the generation of a voltage waveform across the chain-link converter using a step-wise approximation. This in turn enables the auxiliary limb to inject a high quality current, thus enhancing the active current filtering and reactive power compensation capabilities of the voltage source converter.

In addition the modular arrangement of the chain-link converter means that it is straightforward to increase or decrease the number of modules in the chain-link converter to achieve a desired voltage rating, active current filtering capability and reactive power compensation capability.

Each energy storage device may be any device that is capable of storing and releasing energy, e.g. a capacitor, fuel cell or battery.

The capability of the voltage source converter to control the auxiliary limb as a current source in the or each operating mode permits simplification of the design and construction of the limb portions whilst providing high quality power transfer between the AC and DC electrical networks.

For example, in embodiments of the invention, each limb portion may be arranged in the form of a two-state switching block, the first limb portion having a first end connected to the first DC terminal, the first limb portion having a second end connected to the AC terminal, the second limb portion having a first end connected to the second DC terminal, the second limb portion having a second end connected to the AC terminal.

Switching elements with high voltage ratings can be selected for use in the limb portions to further reduce the footprint of the voltage source converter and thereby minimise the real estate costs of the voltage source converter.

At least one primary switching element may include a naturally-commutated active switching device (e.g. a thyristor) or a passive current check device (e.g. a diode). The use of at least one naturally-commutated active switching device or passive current check device in each limb portion not only improves the robustness of the limb portions, but also makes the limb portions capable of withstanding surge currents that might occur due to faults in the DC electrical network due to their construction.

At least one switching element may include a self-commutated active switching device. The self-commutated active switching device may be an insulated gate bipolar transistor, a gate turn-off thyristor, a field effect transistor, an injection-enhanced gate transistor, an integrated gate commutated thyristor or any other self-commutated switching device.

Each switching element may include a switching sub-element or a plurality of series-connected switching sub-elements. The or each switching sub-element may include a single active switching device or a plurality of series-connected active switching devices.

When each switching element includes a switching sub-element, each switching element may further include a passive current check element, the passive current check element being connected in anti-parallel with the single active switching device or the plurality of series-connected active switching devices.

When each switching element includes a plurality of series-connected switching sub-elements, each switching element may include a plurality of passive current check elements, each of the plurality of passive current check elements being connected in anti-parallel with the single active switching device or the plurality of series-connected active switching devices of a respective one of the series-connected switching sub-elements.

The number of active switching devices in each switching element may vary depending on the required voltage rating of that switching element.

The or each passive current check element may include a single passive current check device or a plurality of series-connected passive current check devices. The or each passive current check device may be any device that is capable of limiting current flow in only one direction, e.g. a diode.

The number of passive current check devices in each passive current check element may vary depending on the required voltage rating of that passive current check element.

The voltage source converter may be a multi-phase voltage source converter. For example, in embodiments of the invention, the voltage source converter may include a plurality of converter limbs and a plurality of auxiliary limbs, the AC terminal of each converter limb being connectable to a respective phase of a multi-phase AC electrical network, each auxiliary limb being connected to a respective one of the AC terminals.

In such embodiments of the invention in which a first end of each auxiliary limb is connected to the corresponding AC terminal and a second end of each auxiliary limb is connected to a third DC terminal connected between the first and second DC terminals, the control unit may selectively control the switching of the or each auxiliary switching element of each auxiliary converter to minimise a current flowing into the third DC terminal during the control of each auxiliary limb as a current source in the secondary operating mode. This prevents any unwanted current from flowing into the third DC terminal during the control of each auxiliary limb as a current source in the secondary operating mode.

According to a second aspect of the invention, there is provided a DC to DC converter assembly comprising:
a first voltage source converter according to any embodiment of the first aspect of the invention; and
a second voltage source converter according to any embodiment of the first aspect of the invention,
wherein each AC terminal of the first voltage source converter is connected to a respective one of the AC terminals of the second voltage source converter via a respective one of a plurality of transmission links.

Each AC terminal of the first voltage source converter may be directly connected to a respective one of the AC terminals of the second voltage source converter via a respective one of the plurality of transmission links. Alternatively each AC terminal of the first voltage source converter may be connected to a respective one of the AC terminals of the second voltage source converter via a transformer and a respective one of the plurality of transmission links.

The arrangement of the DC to DC converter assembly according to the invention results in an efficient means of connecting separate DC electrical networks and transferring power therebetween.

Preferred embodiments of the invention will now be described, by way of non-limiting examples only, with reference to the accompanying drawings in which:
Figures 1a and 1b show, in schematic form, prior art voltage source converters;
Figure 2 shows, in schematic form, a voltage source converter according to a first embodiment of the invention;
Figure 3 illustrates, in schematic form, the flow of current in a first limb portion of the voltage source converter of Figure 2;
Figure 4 illustrates, in schematic form, the control of an auxiliary limb as a current source in a primary operating mode, whereby the auxiliary limb forms part of the voltage source converter of Figure 2;
Figure 5 illustrates, in schematic form, the control of an auxiliary limb as a current source in a secondary operating mode, whereby the auxiliary limb forms part of the voltage source converter of Figure 2;
Figure 6 illustrates, in graph form, the change in voltage at an AC terminal of the voltage source converter of Figure 2 during the operation of the voltage source converter of Figure 2 to transfer power between AC and DC electrical networks; and
Figure 7 shows, in schematic form, a DC to DC converter assembly according to a second embodiment of the invention.

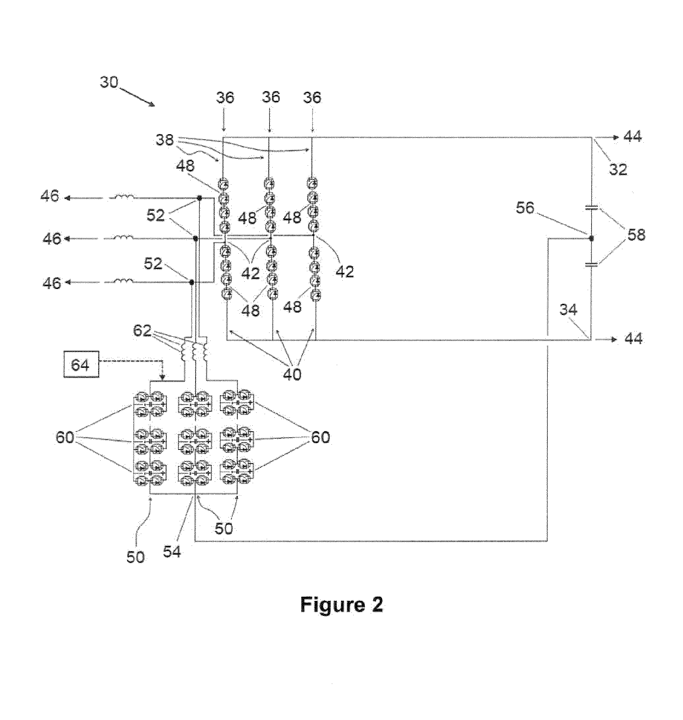

A voltage source converter 30 according to a first embodiment of the invention is shown in Figure 2.

The voltage source converter 30 includes first and second DC terminals 32,34 and three converter limbs 36. Each converter limb 36 extends between the first and second DC terminals 32,34 and has first and second limb portions 38,40 separated by an AC terminal 42. In particular, the first limb portion 38 is connected between the first DC terminal 32 and AC terminal 42, while the second limb portion 40 is connected between the second DC terminal 34 and AC terminal 42.

In use, the first and second DC terminals 32,34 of the voltage source converter 30 are respectively connected to positive and negative terminals of a DC electrical network 44, the positive terminal carrying a voltage of +Vdc, the negative terminal carrying a voltage of -Vdc, and the AC terminal 42 of each converter limb 36 is connected to a respective phase of a three-phase AC electrical network 46.

Each of the first and second limb portions 38,40 includes a primary switching element 48. Each primary switching element 48 includes a plurality of series-connected switching sub-elements, each of which includes a single active switching device. Each primary switching element 48 further includes a plurality of passive current check elements. In each primary switching element 48, each of the plurality of passive current check elements is connected in anti-parallel with the single active switching device of a respective one of the series-connected switching sub-elements. In this manner each limb portion 38,40 is arranged in the form of a two-state switching block.

In use, the primary switching element 48 of each limb portion 38,40 is switchable to switch the corresponding limb portion 38,40 into and out of circuit between the corresponding DC terminal 32,34 and the AC terminal 42 to control the configuration of an AC voltage at the AC terminal 42.

The voltage source converter 30 further includes three auxiliary limbs 50.

A first end 52 of each auxiliary limb 50 is connected to a respective one of the AC terminals 42. A second end 54 of each auxiliary limb 50 is connected to a third DC terminal 56 that is connected between the first and second DC terminals 32,34. In particular, the third DC terminal 56 is a junction between two DC link capacitive elements 58 that are connected between the first and second DC terminals 32,34.

The connection of each auxiliary limb 50 to the corresponding AC terminal 42 in this manner means that, in use, the primary switching element 48 of each limb portion 38,40 is switchable to switch the corresponding auxiliary limb 50 into and out of circuit with the corresponding limb portion 38,40 and thereby switch the corresponding auxiliary limb 50 into and out of circuit with the corresponding DC terminal 32,34.

Each auxiliary limb 50 includes an auxiliary converter. The auxiliary converter includes a plurality of series-connected modules 60 that is connected in series with an impedance element in the form of an inductor 62.

The plurality of series-connected modules 60 defines a chain-link converter.

Each module 60 includes two pairs of auxiliary switching elements and an energy storage device in the form of a capacitor. The pairs of auxiliary switching elements are connected in parallel with the capacitor in a full-bridge arrangement.

It is envisaged that, in other embodiments of the invention, each module 60 may be replaced by another type of module that includes at least one auxiliary switching element and at least one energy storage device, the or each auxiliary switching element and the or each energy storage device in the module combining to selectively provide a bidirectional voltage source that can provide negative, zero or positive voltage.

Each auxiliary switching element includes a single switching sub-element, which includes a single active switching device. Each auxiliary switching element further includes a passive current check element that is connected in anti-parallel with the single active switching device.

Each active switching device of the primary and auxiliary switching elements 48 is in the form of an insulated gate bipolar transistor (IGBT).

Each passive current check element of the primary and auxiliary switching elements 48 includes a single passive current check device that is in the form of a diode. It is envisaged that, in other embodiments of the invention, the single passive current check device may be replaced by a plurality of series-connected passive current check devices.

It is further envisaged that, in other embodiments of the invention, each capacitor may be replaced by another type of energy storage device that is capable of storing and releasing energy, e.g. a fuel cell or battery.

The capacitor of each module 60 is selectively bypassed or inserted into the chain-link converter by changing the states of the auxiliary switching elements. This selectively directs current through the capacitor or causes current to bypass the capacitor, so that the module 60 provides a negative, zero or positive voltage.

The capacitor of the module 60 is bypassed when the auxiliary switching elements in the module 60 are configured to form a short circuit in the module 60. This causes current in the chain-link converter to pass through the short circuit and bypass the capacitor, and so the module 60 provides a zero voltage, i.e. the module 60 is configured in a bypassed mode.

The capacitor of the module 60 is inserted into the chain-link converter when the auxiliary switching elements in the module 60 are configured to allow the current in the chain-link converter to flow into and out of the capacitor. The capacitor then charges or discharges its stored energy so as to provide a non-zero voltage, i.e. the module 60 is configured in a non-bypassed mode. The full-bridge arrangement of the module 60 permits configuration of the auxiliary switching elements in the module 60 to cause current to flow into and out of the capacitor in either direction, and so the module 60 can be configured to provide a negative or positive voltage in the non-bypassed mode.

In this manner the pairs of auxiliary switching elements are connected in parallel with the capacitor in a full-bridge arrangement to define a 4-quadrant bipolar module 60 that can provide negative, zero or positive voltage and can conduct current in two directions.

It is possible to build up a combined voltage across the chain-link converter, which is higher than the voltage available from each of its individual modules 60, via the insertion of the capacitors of multiple modules 60, each providing its own voltage, into the chain-link converter. In this manner switching of the auxiliary switching elements in each module 60 causes the chain-link converter to provide a stepped variable voltage source, which permits the generation of a voltage waveform across the chain-link converter using a step-wise approximation.

The inclusion of the inductor 62 in each auxiliary limb 50 permits decoupling of the AC voltage at the corresponding AC terminal 42 and any voltage generated by the corresponding auxiliary converter. This means that the auxiliary switching elements in each module 60 of each auxiliary converter can be switched to generate a voltage waveform across the corresponding auxiliary converter to modify the voltage across the corresponding inductor 62 to enable control of each auxiliary limb 50 as a current source.

The voltage source converter 30 further includes a control unit 64 to selectively control the switching of the auxiliary switching elements in each module 60 of each auxiliary converter to modify the voltage across the corresponding inductor 62 to control each auxiliary limb 50 as a current source.

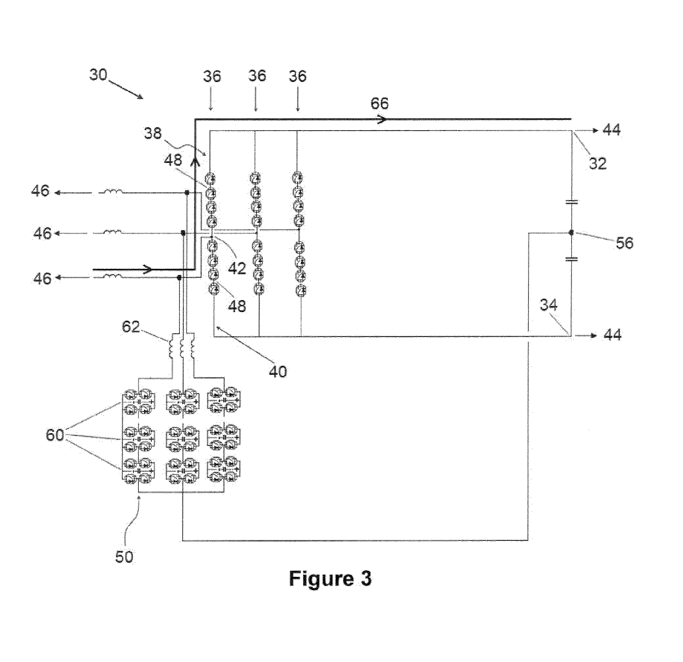

Operation of the voltage source converter 30 of Figure 2 is described as follows, with reference to Figures 3 to 6.

For the purposes of this specification, the operation of the voltage source converter 30 is described with reference to one of its converter limbs 36. It will be appreciated that the described operation of one of the converter limbs 36 of the voltage source converter 30 applies mutatis mutandis to the operation of the other two converter limbs 36.

In order to transfer power between the AC and DC electrical networks 46,44, the primary switching elements 48 are switched to switch the limb portions 38,40 into and out of circuit between the corresponding DC terminal 32,34 and the AC terminal 42 to provide a current path between the AC and DC electrical networks 46,44.

When the first limb portion 38 is switched into circuit between the first DC terminal 32 and the AC terminal 42, the IGBTs in the first limb portion 38 are closed while the IGBTs in the second limb portion 40 are opened. Current is prevented from flowing into the second limb portion 40 as a result of the anti-parallel diodes of the second limb portion 40 being reverse-biased. The switching of the first limb portion 38 into circuit provides a current path that connects the first DC terminal 32 to the AC terminal 42 and thereby results in a voltage of +Vdc being presented at the AC terminal 42. At this stage the first limb portion 38 is conducting a limb portion current 66 between the AC terminal 42 and first DC terminal 32 while the second limb portion 40 is not conducting any limb portion current between the AC terminal 42 and second DC terminal 34, as shown in Figure 3.

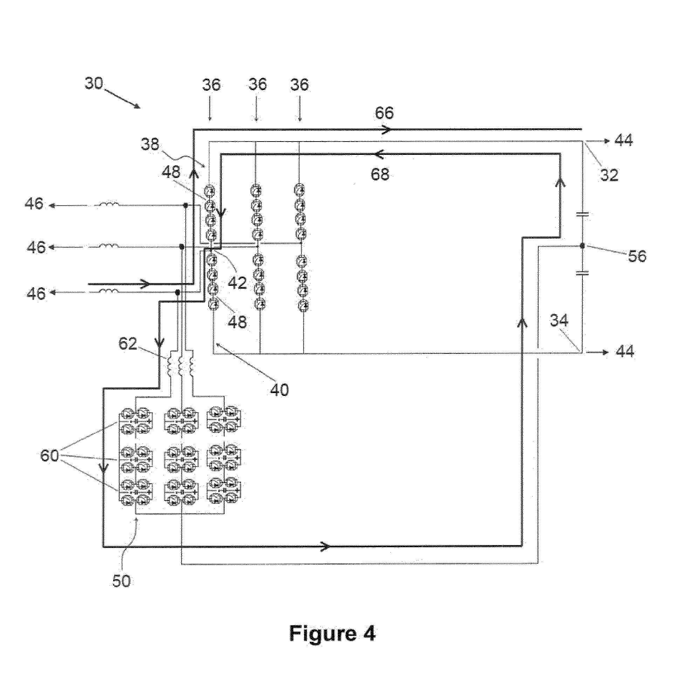

After a certain period of time, the control unit 64 controls the switching of the auxiliary switching elements in each module 60 of the auxiliary converter to control the auxiliary limb 50 as a current source in a primary operating mode A. In the primary operating mode A, the auxiliary limb 50 injects a circulation current 68 that flows in one direction in the first limb portion 38 and is equal in magnitude to the limb portion current 66 flowing in the first limb portion 38. The circulation current 68 flows in the opposite direction to the limb portion current 66 flowing in the first limb portion 38, as shown in Figure 4, and thereby reduces the limb portion current 66 to zero.

Following the reduction of the limb portion current 66 to zero, the first limb portion 38 is switched out of circuit between the first DC terminal 32 and the AC terminal 42, and the second limb portion 40 is switched into circuit between the second DC terminal 34 and the AC terminal 42. In this manner the primary switching elements 48 are switched at zero current during the commutation of current from the first limb portion 38 to the second limb portion 40, thus minimising switching losses.

When the second limb portion 40 is switched into circuit between the second DC terminal 34 and the AC terminal 42, the IGBTs in the second limb portion 40 are closed while the IGBTs in the first limb portion 38 are opened. Current is prevented from flowing into the first limb portion 38 as a result of the anti-parallel diodes of the first limb portion 38 being reverse-biased. The switching of the second limb portion 40 into circuit provides a current path that connects the second DC terminal 34 to the AC terminal 42 and thereby results in a voltage of -Vdc being presented at the AC terminal 42. At this stage the second limb portion 40 is conducting a limb portion current between the AC terminal 42 and second DC terminal 34 while the first limb portion 38 is not conducting any limb portion current between the AC terminal 42 and first DC terminal 32.

After a certain period of time, the control unit 64 controls the switching of the auxiliary switching elements in each module 60 of the auxiliary converter to control the auxiliary limb 50 as a current source in the primary operating mode A. In the primary operating mode A, the auxiliary limb 50 injects a circulation current that flows in one direction in the second limb portion 40 and is equal in magnitude to the limb portion current 66 flowing in the second limb portion 40. The circulation current flows in the opposite direction to the limb portion current flowing in the second limb portion 40 and thereby reduces the limb portion current to zero.

Following the reduction of the limb portion current 66 to zero, the second limb portion 40 is switched out of circuit between the second DC terminal 34 and the AC terminal 42, and the first limb portion 38 is switched back into circuit between the first DC terminal 32 and the AC terminal 42. In this manner the primary switching elements 48 are switched at zero current during the commutation of current from the second limb portion 40 to the first limb portion 38, thus minimising switching losses.

Switching the first and second limb portions 38,40 in and out of circuit between the AC terminal 42 and the corresponding DC terminal 32,34 in this manner allows the voltage at the AC terminal 42 to commutate between +Vdc and -Vdc, thereby generating an AC voltage at the AC terminal 42.

During the control of each auxiliary limb 50 as a current source in the primary operating mode A, the three auxiliary limbs 50 are controlled independently of each other.

Depending on the requirements of the associated power application, each limb portion 38,40 may be switched into and out of circuit between the corresponding DC terminal 32,34 and the AC terminal 42 once or a plurality of times (e.g. in a pulse width modulated manner) per cycle of fundamental frequency of the AC electrical network 46. Accordingly, to enable soft-switching of the primary switching elements 48, the control unit 64 may selectively control the switching of the auxiliary switching elements in each module 60 of the auxiliary converter to control the auxiliary limb 50 as a current source in the primary operating mode A once or a plurality of times per cycle of fundamental frequency of the AC electrical network 46.

The configuration of the voltage source converter 30 to enable soft-switching of the primary switching elements 48 therefore results in an efficient means of connecting the AC and DC electrical networks 46,44 and transferring power therebetween.

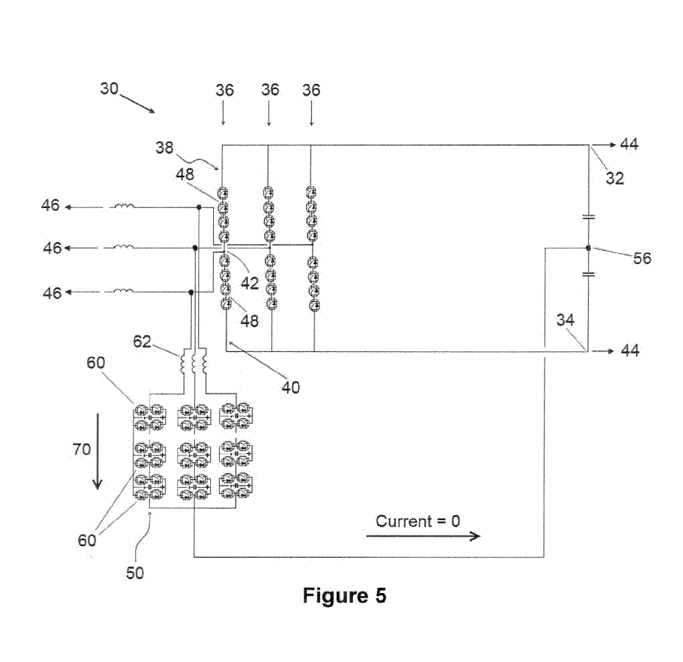

In the periods before and after the commutation of current from one limb portion to the other limb portion (i.e. before and after the switching of each limb portion 38,40 into or out of circuit between the AC terminal 42 and the corresponding DC terminal 32,34), the control unit 64 controls the switching of the auxiliary switching elements in each module 60 of the auxiliary converter to control the auxiliary limb 50 as a current source in a secondary operating mode B. In the secondary operating mode B, the auxiliary limb 50 injects a current into the AC terminal 42 to simultaneously carry out active current filtering and reactive power compensation, as shown in Figure 5.

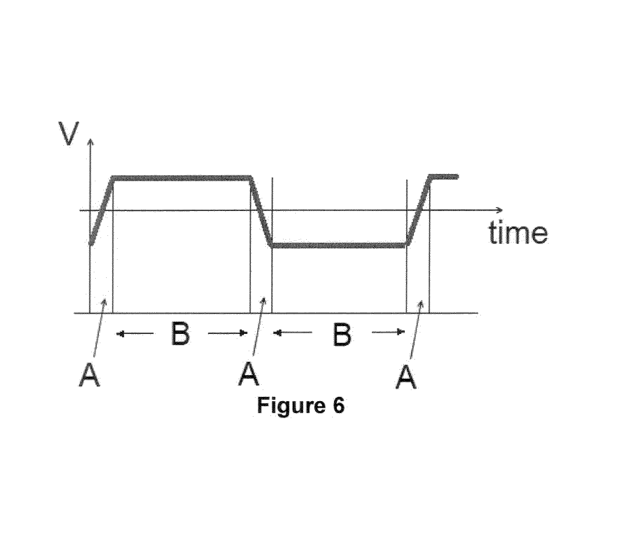

In this manner the control unit 64 controls the switching of the auxiliary switching elements in each module 60 of the auxiliary converter to control the auxiliary limb 50 as a current source alternately in the primary and secondary operating modes A,B, as shown in Figure 6 which illustrates, in graph form, the alternation between the primary and secondary operating modes A,B in comparison to the change in voltage at the AC terminal 42 during the operation of the voltage source converter 30 to transfer power between the AC and DC electrical networks 46,44.

To carry out the active current filtering, the auxiliary limb 50 injects, into the AC terminal 42, a current 70 that includes an anti-phase version of one or more current components to be filtered from an alternating current presented to the AC electrical network 46 and/or a direct current presented to the DC electrical network 44.

The provision of the voltage source converter 30 with an active current filtering capability renders the voltage source converter 30 capable of producing high quality output currents at the AC and/or DC terminals of the voltage source converter 30 through cancellation of one or more unwanted current components (e.g. harmonic current components, DC ripple). In contrast, omission of the active current filtering capability from the voltage source converter 30 means that it would be necessary to connect additional filtering hardware to the AC and/or DC terminals of the voltage source converter 30 to obtain the desired high quality output currents, thus adding to the real estate requirements of the voltage source converter 30.

To carry out the reactive power compensation, the auxiliary limb 50 injects, into the AC terminal 42, a current 70 to modify an alternating current presented to the AC electrical network 46 into a leading or lagging alternating current.

The provision of the voltage source converter 30 with a reactive power compensation capability renders the voltage source converter 30 capable of exchanging reactive power to the AC electrical network 46 to meet a desired real power-reactive power operating envelope. In addition, if the AC terminal 42 is connected in use to a transformer, reactive power may be exchanged with the AC electrical network 46 to fulfil reactive power requirements of the transformer. In contrast, omission of the reactive power compensation capability from the voltage source converter 30 means that it would be necessary to connect additional converter hardware to the AC terminal 42 of the voltage source converter 30 to enable exchange of reactive power with the AC electrical network 46, thus further adding to the real estate requirements of the voltage source converter 30.

During the control of the auxiliary limb 50 as a current source in the secondary operating mode B, zero current flows into the third DC terminal 56, as shown in Figure 5. This is because the arrangement of the three auxiliary limbs 50 as set out above results in the three auxiliary limbs 50 being connected in a star configuration in which the second ends 54 of the auxiliary limbs 50 are connected to a common junction that is connected to the third DC terminal 56. Therefore, the control unit 64 can control the switching of the auxiliary switching elements in each module 60 of each auxiliary converter so that the summation of currents at the common junction results in zero current flowing into the third DC terminal 56 during the control of the auxiliary limb 50 as a current source in the secondary operating mode B. This may be achieved by, for example, using the control unit 64 to control the switching of the auxiliary switching elements in each module 60 of each auxiliary converter so that the current in each auxiliary limb 50 is displaced by 120 electrical degrees from each of the currents in the other two auxiliary limbs 50, whereby the current in each auxiliary limb 50 may include a real current component, a reactive current component and/or at least one harmonic current component. This prevents any unwanted current from flowing into the third DC terminal 56 during the control of each auxiliary limb 50 as a current source in the secondary operating mode B.

It will be appreciated that the control unit 64 may instead control the switching of the auxiliary switching elements in each module 60 of each auxiliary converter so that the summation of currents at the common junction results in a non-zero current flowing into the third DC terminal 56 during the control of the auxiliary limb 50 as a current source in the secondary operating mode B.

The configuration of the voltage source converter 30 to enable further control of each auxiliary limb 50 as a current source in the secondary operating mode B not only provides the voltage source converter 30 with active current filtering and reactive power compensation capabilities, but also means that the auxiliary limbs 50 are in use throughout the operation of the voltage source converter 30 to transfer power between the AC and DC electrical networks 46,44 (as shown in Figure 6), thus maximising the usage of the auxiliary limbs 50 and thereby further increasing the efficiency of the voltage source converter 30.

The configuration of the voltage source converter 30 to enable further control of each auxiliary limb 50 as a controlled source in the secondary operating mode B therefore provides the voltage source converter 30 with additional power transfer functionality without requiring the connection of additional hardware to the voltage source converter 30, thus increasing the efficiency and reliability of the voltage source converter 30.

It is envisaged that, in other embodiments of the invention, the control unit may selectively control the switching of the auxiliary switching elements in each module of the auxiliary converter to control the auxiliary limb as a current source in the secondary operating mode to inject a current into the AC terminal to:
- only carry out active current filtering;
- only carry out reactive power compensation; or
- sequentially carry out active current filtering and reactive power compensation.

The capability of the voltage source converter 30 to control each auxiliary limb 50 as a current source in the primary and secondary operating modes A,B permits simplification of the design and construction of the limb portions 38,40 whilst providing high quality power transfer between the AC and DC electrical networks 46,44.

Switching elements with high voltage ratings can be selected for use in the limb portions 38,40 to further reduce the footprint of the voltage source converter 30 and thereby minimise the real estate costs of the voltage source converter 30.

It is envisaged that, in other embodiments of the invention, the configuration of each of the primary and auxiliary switching elements may vary as follows.

At least one primary switching element may include a naturally-commutated active switching device (e.g. a thyristor) or a passive current check device (e.g. a diode). The use of at least one naturally-commutated active switching device or passive current check device in each limb portion not only improves the robustness of the limb portions, but also makes the limb portions capable of withstanding surge currents that might occur due to faults in the DC electrical network due to their construction.

At least one switching element may include a self-commutated active switching device. The self-commutated active switching device may be a gate turn-off thyristor, a field effect transistor, an injection-enhanced gate transistor, an integrated gate commutated thyristor or any other self-commutated switching device.

Each switching element may include a switching sub-element or a plurality of series-connected switching sub-elements. The or each switching sub-element may include a single active switching device or a plurality of series-connected active switching devices.

When each switching element includes a switching sub-element, each switching element may further include a passive current check element, the passive current check element being connected in anti-parallel with the single active switching device or the plurality of series-connected active switching devices.

When each switching element includes a plurality of series-connected switching sub-elements, each switching element may include a plurality of passive current check elements, each of the plurality of passive current check elements being connected in anti-parallel with the single active switching device or the plurality of series-connected active switching devices of a respective one of the series-connected switching sub-elements.

The number of active switching devices in each switching element may vary depending on the required voltage rating of the switching element.

The or each passive current check device may be any device that is capable of limiting current flow in only one direction.

The number of passive current check devices in each passive current check element may vary depending on the required voltage rating of the passive current check element.

It is envisaged that, in other embodiments of the invention, the number of converter limbs in the voltage source converter may vary. In one embodiment, the voltage source converter may include a single converter limb and a single auxiliary limb. In another embodiment, the voltage source converter may include a plurality of converter limbs 36 and a plurality of auxiliary limbs, the AC terminal of each converter limb being connectable to a respective phase of a multi-phase AC electrical network, each auxiliary limb being connected to a respective one of the AC terminals.

It is also envisaged that, in other embodiments of the invention, the auxiliary converter may be any other type of converter that includes at least one auxiliary switching element and is capable of being switched to control the auxiliary limb as a current source.

It is further envisaged that, in other embodiments of the invention, the control unit may selectively control the switching of the auxiliary switching elements in each module of each auxiliary converter to control each auxiliary limb as a current source only in the primary operating mode during the operation of the voltage source converter to transfer power between the AC and DC electrical networks. In this case, each auxiliary limb is only required to be controlled as a current source in the primary operating mode to enable soft-switching of the primary switching elements of the limb portions for relatively short periods of times over a duty cycle. As a result, the overall rating of the voltage source converter may be reduced by optimising the auxiliary limb for this specific task.

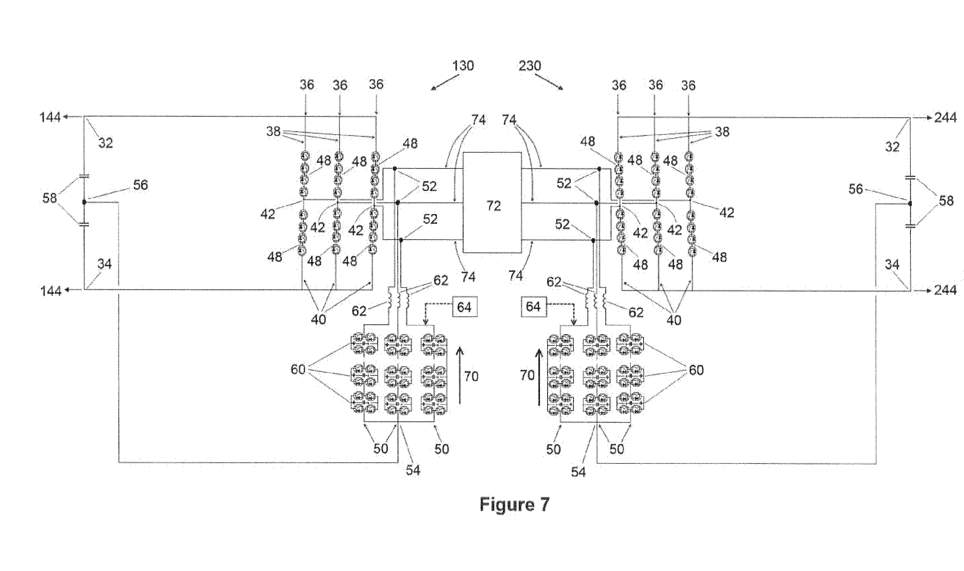

A DC to DC converter assembly according to a second embodiment of the invention is shown in Figure 7.

The DC to DC converter assembly includes first and second voltage source converters 130,230.

Each of the first and second voltage source converters 130,230 is similar in structure and operation to the voltage source converter 30 of Figure 2, and like features share the same reference numerals.

Each AC terminal 42 of the first voltage source converter 130 is connected to a respective one of the AC terminals 42 of the second voltage source converter 230 via a transformer 72 and a respective one of a plurality of transmission links 74.

It is envisaged that, in other embodiments of the invention, each AC terminal of the first voltage source converter may be directly connected to a respective one of the AC terminals of the second voltage source converter via a respective one of the plurality of transmission links.

In use, the first and second DC terminals 32,34 of the first voltage source converter 130 are respectively connected to positive and negative terminals of a first DC electrical network 144, while the first and second DC terminals 32,34 of the second voltage source converter 230 are respectively connected to positive and negative terminals of a second DC electrical network 244.

The operation of each of the first and second voltage source converters 130,230 differs from the operation of the voltage source converter of Figure 2 in that:
- the control unit 64 of the first voltage source converter 130 controls the switching of the auxiliary switching elements in each module 60 of each corresponding auxiliary converter to control each corresponding auxiliary limb 50 as a current source in the secondary operating mode B to inject a current 70 into each corresponding AC terminal 70 to modify an alternating current presented to the transformer 72 into a leading or lagging alternating current. In this manner reactive power is exchanged with the transformer 72 to fulfil reactive power requirements of the transformer 72;
- the control unit 64 of the second voltage source converter 230 controls the switching of the auxiliary switching elements in each module 60 of each corresponding auxiliary converter to control each corresponding auxiliary limb 50 as a current source in the secondary operating mode B to inject a current 70 into each corresponding AC terminal 70 to filter DC ripple from a direct current presented to the second DC electrical network 244.

## Claims

1. A voltage source converter comprising:
a converter limb extending between first and second DC terminals and having first and second limb portions separated by an AC terminal, the first and second DC terminals being connectable to a DC electrical network and the AC terminal being connectable to an AC electrical network, each limb portion including a primary switching element, the primary switching element of each limb portion being switchable to switch the corresponding limb portion into and out of circuit between the corresponding DC terminal and the AC terminal to control the configuration of an AC voltage at the AC terminal;
an auxiliary limb including an auxiliary converter, the auxiliary converter including at least one auxiliary switching element, the auxiliary limb being connected to the AC terminal., the primary switching element of each limb portion being switchable to switch the auxiliary limb into and out of circuit with the corresponding limb portion and thereby switch the auxiliary limb into and out of circuit with the corresponding DC terminal; and
a control unit to selectively control the switching of the or each auxiliary switching element of the auxiliary converter to control the auxiliary limb as a current source in a primary operating mode to inject a circulation current that flows in one direction in one of the first and second limb portions to minimise a limb portion current flowing in the opposite direction in that limb portion.

2. A voltage source converter according to Claim 1 wherein the circulation and limb portion currents are equal in magnitude.

3. A voltage source converter according to Claim 1 or Claim 2 wherein the control unit selectively controls the switching of the or each auxiliary switching element of the auxiliary converter to control the auxiliary limb as a current source in the primary operating mode once or a plurality of times per cycle of fundamental frequency of the AC electrical network.

4. A voltage source converter according to any preceding claim wherein the control unit selectively controls the switching of the or each auxiliary switching element of the auxiliary converter to control the auxiliary limb as a current source in a secondary operating mode to inject a current into the AC terminal to:
filter one or more current components from an alternating current presented to the AC electrical network and/or a direct current presented to the DC electrical network; and/or
modify an alternating current presented to the AC electrical network into a leading or lagging alternating current.

5. A voltage source converter according to Claim 4 wherein the control unit selectively controls the switching of the or each auxiliary switching element of the auxiliary converter to control the auxiliary limb as a current source alternately in the primary and secondary operating modes.

6. A voltage source converter according to any preceding claim wherein the auxiliary limb further includes at least one impedance element, and the control unit selectively controls the switching of the or each auxiliary switching element of the auxiliary converter to modify a voltage across the or each inductive element to control the auxiliary limb as a current source in the or each operating mode.

7. A voltage source converter according to any preceding claim wherein a first end of the auxiliary limb is connected to the AC terminal and a second end of the auxiliary limb is connectable to ground.

8. A voltage source converter according to any preceding claim wherein a first end of the auxiliary limb is connected to the AC terminal and a second end of the auxiliary limb is connected to a third DC terminal that is connected between the first and second DC terminals.

9. A voltage source converter according to any preceding claim wherein the auxiliary converter includes at least one module, the or each module including at least one auxiliary switching element and at least one energy storage device, the or each auxiliary switching element and the or each energy storage device of each module combining to selectively provide a voltage source.

10. A voltage source converter according to Claim 9 wherein the or each auxiliary switching element and the or each energy storage device in the or each module combine to selectively provide a bidirectional voltage source that can provide negative, zero or positive voltage.

11. A voltage source converter according to Claim 9 or Claim 10 wherein the auxiliary converter includes a plurality of series-connected modules.

12. A voltage source converter according to any preceding claim wherein each limb portion is arranged in the form of a two-state switching block, the first limb portion having a first end connected to the first DC terminal, the first limb portion having a second end connected to the AC terminal, the second limb portion having a first end connected to the second DC terminal, the second limb portion having a second end connected to the AC terminal.

13. A voltage source converter according to any preceding claim including a plurality of converter limbs and a plurality of auxiliary limbs, the AC terminal of each converter limb being connectable to a respective phase of a multi-phase AC electrical network, each auxiliary limb being connected to a respective one of the AC terminals.

14. A voltage source converter according to Claim 13 when dependent from Claim 8 in combination with either Claim 4 or Claim 5, wherein the control unit selectively controls the switching of the or each auxiliary switching element of each auxiliary converter to minimise a current flowing into the third DC terminal during the control of each auxiliary limb as a current source in the secondary operating mode.

15. A DC to DC converter assembly comprising:
a first voltage source converter according to any preceding claim; and
a second voltage source converter according to any preceding claim,
wherein each AC terminal of the first voltage source converter is connected to a respective one of the AC terminals of the second voltage source converter via a respective one of a plurality of transmission links.
